# EUROPÄISCHE PATENTANMELDUNG

(11) **EP 1 128 169 A1**
(43) Veröffentlichungstag der Anmeldung: **29.08.2001**
(21) Anmeldenummer: 00122521.8
(22) Anmeldetag: 16.10.2000
(51) Int. Cl.: G01F 23/284

(54) **Verfahren und Vorrichtung zur Bestimmung des Grenzfüllstandes eines Füllguts in einem Behälter**

(30) Priorität: 29.12.1999 US 473427
(71) Anmelder: Endress + Hauser GmbH + Co., 79689 Maulburg (DE)
(72) Erfinder: Cummings, Donald, D., Greenwood, IN 46143 (US); Wartmann, Gerd, Greenwood, IN 46142 (US); Perdue, Kenneth L., Franklin, IN 46131 (US); Pandit, Vishram, Montgomery Village, MD 20886 (US); Neuhaus, Joachim, D-79585 Steinen (DE)
(74) Vertreter: Andres, Angelika

(57) **Zusammenfassung**

Die Erfindung betrifft eine Vorrichtung und ein Verfahrens zur Bestimmung eines Grenzfüllstandes eines Füllguts (9) in einem Behälter (8).

Der Erfindung liegt die Aufgabe zugrunde, ein Verfahren und eine Vorrichtung vorzuschlagen, die es erlauben, einen vorgegebenen Grenzstand eines Füllguts (9) in einem Behälter (8) zu detektieren.

Die Aufgabe wird bezüglich einer ersten Ausführungsform des erfindungsgemäßen Verfahrens dadurch gelöst, daß ein hochfrequentes Meßsignal auf ein leitfähiges Element (6) einer vorgegebenen Länge eingekoppelt und an dem leitfähigen Element (6) entlanggeführt wird, daß das Meßsignal jeweils in den Bereichen des leitfähigen Elements (6) als systemabhängiges Echosignal reflektiert wird, in denen sich der Wellenwiderstand sprunghaft ändert, daß das Meßsignal als Nutzechosignal reflektiert wird, wenn sich das freie Ende des leitfähigen Elements (6) in unmittelbarer Nähe der Oberfläche (10) des Füllguts (9) oder in Kontakt mit dem Füllgut (9) befindet, und daß das Erreichen des vorgegebenen Füllstandes des Füllguts (9) in dem Behälter (8) aufgrund der relativen Lage von Nutzechosignal und zumindest einem systemabhängigen Echosignal oder aufgrund der relativen Lage von zwei systemabhängigen Echosignalen ermittelt wird.

## Beschreibung

Die Erfindung bezieht sich auf eine Vorrichtung und ein Verfahren zur Bestimmung eines Grenzfüllstandes eines Füllguts in einem Behälter.

Zur Detektion des Grenzstandes von Flüssigkeiten oder Schüttgütern in Behältern werden kapazitive Meßeinrichtungen oder Vibrationssysteme eingesetzt. Neben diesen Grenzstanddetektoren, die das Erreichen eines vorgegebenen Füllstandes signalisieren, sobald sie in Kontakt mit dem zu messenden Füllgut kommen, gibt es berührungslos arbeitende Meßsysteme, die als Meßstrahlung Ultraschallwellen, Mikrowellen - oder in besonders kritischen Anwendungen - radioaktive Strahlung verwenden.

Die bekannten Systeme haben sich in der Praxis bewährt, sind jedoch nicht in allen möglichen Anwendungsfällen nutzbar. Kapazitive Meßeinrichtungen und Vibrationssysteme treten in direkten Kontakt mit dem zu messenden Füllgut. Werden sie zur Detektion von aggressiven Füllgütern eingesetzt, so müssen sie in hohem Maße korrosionsbeständig sein. Desweiteren führen Ablagerungen an den Meßeinrichtungen zu ungenauen Meßergebnissen. Der Einsatz von kapazitiven Sensoren ist problematisch, wenn der Füllstand unterschiedlicher Füllguter mit unterschiedlichen elektrischen Eigenschaften gemessen werden soll.

Begrenzt werden die Einsatzmöglichkeiten der bekannt gewordenen Sensoren durch die Temperatur- und Druckverhältnisse am Meßort. So verlieren beispielsweise die Piezokeramiken, die bei den Vibrationssystemen zum Einsatz kommen, irreversibel ihre charakteristischen Eigenschaften, sobald die Umgebungstemperatur einen von dem jeweiligen Material abhängigen spezifischen Wert, die Curie-Temperatur, überschreitet.

Eine starke Temperaturabhängigkeit zeigen auch die Meßeinrichtungen, die auf der Basis von Ultraschallwellen arbeiten. Um verläßliche Meßergebnisse zu erhalten, ist hier eine Temperaturkompensation unbedingt erforderlich.

Auch sind Ultraschall-Sensoren in hohem Maße abhängig von der Zusammensetzung des Gasraumes, der sich über dem Füllgut befindet; unter Vakuumbedingungen oder bei hohen Drücken im Gasraum sind sie nicht einsetzbar. Zu erwähnen bleibt, daß die Empfindlichkeit von Ultraschall-Sensoren auch von dem Geräuschpegel der Umgebung beeinflußt wird.

Bei einer Vielzahl von Einsatzgebieten, beispielsweise in der Petrochemie, Chemie und Lebensmittelindustrie, sind hochgenaue Messungen des Füllstandes von Flüssigkeiten oder Schüttgütern in Behältern (Tanks, Silos, usw.) gefordert. Deshalb kommen hier in zunehmendem Maße Sensoren zum Einsatz, bei denen kurze elektromagnetische Hochfrequenzimpulse oder kontinuierliche Mikrowellen auf eine leitfähiges, langgestrecktes Element z. B. einen Stab- oder eine Seilsonde eingekoppelt und mittels des leitfähigen Elements in den Behälter, in dem das Füllgut gelagert ist, hineingeführt werden.
Physikalisch gesehen wird bei dieser Meßmethode der Effekt ausgenutzt, daß an der Grenzfläche zwischen zwei verschiedenen Medien, z. B. Luft und Öl oder Luft und Wasser, infolge der sprunghaften Änderung (Diskontinuität) der Dielektrizitätszahlen beider Medien ein Teil der geführten Hochfrequenzimpulse bzw. der geführten Mikrowellen reflektiert und über das leitfähige Element zurück in eine Empfangsvorrichtung geleitet wird. Der reflektierte Anteil der Hochfrequenzimpulse bzw. der Mikrowellen ist dabei um so größer, je unterschiedlicher die Dielektrizitätszahlen der beiden Medien sind. Anhand der Laufzeit des reflektierten Anteils der Hochfrequenzimpulse bzw. der Mikrowellen läßt sich die Entfernung zur Grenzfläche bestimmen. Bei Kenntnis der Leerdistanz des Behälters kann der Füllstand des Füllguts in dem Behälter berechnet werden.

Sensoren mit geführten hochfrequenten Signalen (Impulse oder Wellen) zeichnen sich gegenüber Sensoren, die hochfrequente Impulse oder Wellen frei abstrahlen (Freifeld-Mikrowellen-Systeme (FMR) bzw. 'echte Radar-Systeme') durch eine wesentlich geringere Dämpfung aus. Grund hierfür ist, daß der Leistungsfluß ganz gezielt entlang der Stab- oder Seilsonde bzw. des leitfähigen Elements erfolgt. Weiterhin haben die Sensoren mit geführten hochfrequenten Signalen eine höhere Meßgüte im Nahbereich als frei abstrahlende Sensoren.

Der Vorteil von Sensoren mit geführten hochfrequenten Signalen liegt darüber hinaus in der hohen Sicherheit und Zuverlässigkeit der Füllstandsmessung. Dies rührt daher, daß die Messung mit geführten Meßsignalen weitgehend unabhängig ist von den Produkteigenschaften des Füllguts (Feuchtigkeit, Dielektrizitätszahl, Füllgutwechsel), der Behälterkonstruktion (Werkstoffe, Geometrie) oder den sonstigen Betriebsbedingungen (Staub, Ansatz und Schüttgutwinkel).
Bislang ist es nicht bekannt geworden, derartige Meßsysteme mit geführten Meßsignalen als Grenzstand-Detektoren einzusetzen.

Der Erfindung liegt die Aufgabe zugrunde, ein Verfahren und eine Vorrichtung vorzuschlagen, die es erlauben, einen vorgegebenen Grenzstand eines Füllguts in einem Behälter mit hoher Zuverlässigkeit zu detektieren.

Gemäß einer ersten Ausführungsform des erfindungsgemäßen Verfahrens wird die Aufgabe dadurch gelöst, daß ein hochfrequentes Meßsignal auf ein leitfähiges Element einer vorgegebenen Länge eingekoppelt und an dem leitfähigen Element entlanggeführt wird, daß das Meßsignal jeweils in den Bereichen des leitfähigen Elements als systemabhängiges Echosignal reflektiert wird, in denen sich der Wellenwiderstand sprunghaft ändert, daß das Meßsignal als Nutzechosignal reflektiert wird, wenn sich das freie Ende des leitfähigen Elements in unmittelbarer Nähe der Oberfläche des Füllguts oder in Kontakt mit dem Füllgut befindet, und daß das Erreichen des vorgegebenen Füllstandes des Füllguts in dem Behälter aufgrund der relativen Lage von Nutzechosignal und zumindest einem systemabhängigen Echosignal oder aufgrund der relativen Lage von zwei systemabhängigen Echosignalen ermittelt wird. Gemäß einer vorteilhaften Ausgestaltung des erfindungsgemäßen Verfahrens wird als systemabhängiges Echosignal das Signal herangezogen wird, das beim Übergang von der Einkopplung des Meßsignals auf das leitfähige Element auftritt (→ Fiducial Launcher). Zusätzlich oder alternativ wird als systemabhängiges Echosignal das Signal herangezogen, das am freien Ende des leitfähigen Elements reflektiert wird (→ End-of-Line Peak). Weiterhin ist es möglich, innerhalb der Einkoppeleinheit einen quasi künstlichen Impedanzsprung zu erzeugen. Das entsprechende Echosignal wird dann als systemabhängiges Echosignal definert. Ebenso ist es möglich, die Laufzeit des Echosignals einfach ab dem Zeitpunkt der Erzeugung des Meßsignals zu bestimmen.

Beim erfindungsgemäßen Verfahren ist es also nicht unbedingt erforderlich, daß das leitfähige Element mit dem zu detektierenden Füllgut in Kontakt kommt. Daher weist das zuvor beschriebene Verfahren in dieser Variante auch die zuvorgenannten Vorteile der berührungslosen Meßmethoden auf. Gleichzeitig hat das erfindungsgemäße Verfahren gegenüber den Meßverfahren, bei denen die Meßsignale frei in den Raum abgestrahlt werden, den Vorteil, daß der Einfluß von äußeren Störgrößen weitgehend ausgeschlossen ist. Diese bevorzugte Variante des erfindungsgemäßen Verfahrens arbeitet übrigens besonders gut, wenn das Füllgut eine hohe Dielektrizitätskonstante aufweist.

Gemäß einer bevorzugten Weiterbildung des erfindungsgemäßen Verfahrens wird das Erreichen des vorgegebenen Füllstandes ausgegeben, sobald innerhalb eines vorgegebenen Zeitfensters das Nutzechosignal auftritt, welches ein entgegengesetztes Vorzeichen aufweist wie der Peak des Fiducial Launchers oder der End-of-Line Peak. Diese Art der Erkennung des Grenzstandes ist natürlich sehr vorteilhaft, da sie auf einer einfachen Ja/Nein-Abfrage basiert, die sich technisch problemlos, z. B. mittels eines Schwellenwertdetektors, realisieren läßt. Komplizierte Auswerteverfahren auf der Grundlage der Laufzeit der Meßsignale erübrigen sich.

Weiterhin schlägt eine vorteilhafte Ausgestaltung des erfindungsgemäßen Verfahrens vor, daß das Erreichen des maximalen oder minimalen Füllstandes ausgegeben wird, sobald innerhalb eines vorgegebenen Zeitfensters der End-of-Line Peak auftritt. Diese Ausgestaltung ist nur dann anwendbar, wenn das leitfähige Element in das Füllgut eintaucht. Sobald dies der Fall ist, ändert sich aufgrund der unterschiedlichen Laufzeiten der Meßsignale außerhalb und innerhalb des Füllguts die Lage des End-of-Line Peaks relativ zur konstanten Lage des Peaks, der aufgrund der Reflexion des Meßsignals bei Übergang von der Einkoppeleinheit auf das leitfähige Element auftritt.

Die Aufgabe wird desweiteren durch folgende alternative Ausführungsform des erfindungsgemäßen Verfahrens gelöst: ein hochfrequentes Meßsignal wird auf ein leitfähiges Element einer vorgegebenen Länge eingekoppelt und an dem leitfähigen Element entlanggeführt; das Meßsignal wird als Echosignal jeweils in den Bereichen des leitfähigen Elements reflektiert wird, in denen sich der Wellenwiderstand sprunghaft ändert; ein erstes Echosignal und ein zweites Echosignal werden bei unterschiedlichen Füllständen ermittelt; anschließend wird ein Differenzsignal aus dem ersten Echosignal und dem zweiten Echosignal gebildet und das Erreichen eines vorgegebenen Grenzstandes des Füllguts in dem Behälter wird anhand der Lage des Peaks bzw. der Peaks des Differenzsignals ermittelt. Weiterhin ist es auch möglich, anhand der Amplitudenänderung der Peaks des Differenzsignals auf das Erreichen eines vorgegebenen Füllstandes rückzuschließen. Es hat sich herausgestellt, daß diese Varianten des erfindungsgemäßen Verfahrens sehr vorteilhaft sind, wenn der Füllstand eines Füllguts mit relativ geringer Dielektrizitätskonstante zu detektieren ist.

Die Aufgabe wird weiterhin durch folgende Ausgestaltung gelöst: Ein hochfrequentes Meßsignal wird auf ein leitfähiges Element einer vorgegebenen Länge eingekoppelt und an dem leitfähigen Element entlanggeführt; das Meßsignal wird jeweils in den Bereichen des leitfähigen Elements als systemabhängiges Echosignal reflektiert wird, in denen sich der Wellenwiderstand sprunghaft ändert; das Meßsignal wird als Nutzechosignal reflektiert, wenn sich das freie Ende des leitfähigen Elements in unmittelbarer Nähe der Oberfläche des Füllguts oder in Kontakt mit dem Füllgut befindet; weiterhin wird das Erreichen des vorgegebenen Füllstandes des Füllguts in dem Behälter aufgrund der Änderung in der Amplitude eines systemabhängigen Echosignals, insbesondere auf aufgrund der Änderung in der Amplitude des End-of-line Peaks bestimmt.

Vorzugsweise wird gemäß einer Weiterbildung der zuvor beschriebenen Ausführungsform des erfindungsgemäßen Verfahrens das erste Echosignal ermittelt, wenn sich das freie Ende des leitfähigen Elements in unmittelbarer Nähe zur Oberfläche des Füllguts oder in Kontakt mit dem Füllgut befindet, während das zweite Echosignal ermittelt wird, wenn sich das freie Ende des leitfähigen Elements nicht in unmittelbarer Nähe zur Oberfläche des Füllguts oder in Kontakt mit dem Füllgut befindet.

Eine vorteilhafte Ausgestaltung des erfindungsgemäßen Verfahrens sieht vor, daß das Erreichen des vorgegebenen Füllstands ausgegeben wird, sobald in einem Fenster, in dem der Peak des Fiducial Launchers und/oder des End-of-Line Peak auftreten/auftritt, wenn kein Füllgut in unmittelbarer Nähe oder in Kontakt mit dem leitfähigen Element ist, das Differenzsignal auftritt.

Eine bevorzugte -da einfach zu realisierende- Ausgestaltung des erfindungsgemäßen Verfahrens sieht vor, daß das Erreichen des vorgegebenen Füllstandes ausgegeben wird, wenn die Amplitude des Nutzechosignals oder ein Peak des Differenzsignals größer oder gleich einem vorgegebenen Schwellenwert ist.

Bezüglich der Vorrichtung wird die Aufgabe durch die folgenden Merkmale gelöst: die erfindungsgemäße Vorrichtung besteht aus einer Signalerzeugungseinheit, einer Einkoppeleinheit, einem leitfähigen Element, einer Empfangseinheit und einer Auswerteeinheit, wobei die Signalerzeugungseinheit hochfrequente Meßsignale erzeugt, wobei die Einkoppeleinheit ein Meßsignal auf ein leitfähiges Element einer vorgegebenen Länge einkoppelt, wobei das leitfähige Element das Meßsignal führt, wobei das Meßsignal jeweils in den Bereichen des leitfähigen Elements als systemabhängiges Echosignal Reflexionen erfährt, in denen sich der Wellenwiderstand sprunghaft ändert, wobei das Meßsignal als Nutzechosignal Reflexionen erfährt, wenn das leitfähige Element in unmittelbarer Nähe zur Oberfläche des Füllguts oder in Kontakt mit dem Füllgut ist, und wobei die Auswerteeinheit das Erreichen eines vorgegebenen Füllstandes des Füllguts in dem Behälter ausgibt, wenn das Nutzechosignal bzw. ein erstes systemabhängiges Echosignal innerhalb eines vorgegebenen Zeitfensters bezüglich des systemabhängigen Echosignals bzw. eines zweiten systemabhängigen Echosignals auftritt.

Weiterhin wird die Aufgabe durch die folgende Variante des erfindungsgemäßen Vorrichtung gelöst: Wiederum besteht die Vorrichtung aus einer Signalerzeugungseinheit, einer Einkoppeleinheit, einem leitfähigen Element, einer Empfangseinheit und einer Auswerteeinheit, wobei die Signalerzeugungseinheit hochfrequente Meßsignale erzeugt, wobei die Einkoppeleinheit ein Meßsignal auf ein leitfähiges Element einer vorgegebenen Länge einkoppelt, wobei das leitfähige Element das Meßsignal führt, wobei das Meßsignal jeweils in den Bereichen des leitfähigen Elements als Echosignal reflektiert wird, in denen sich der Wellenwiderstand sprunghaft ändert, und wobei die Empfangseinheit/Auswerteeinheit ein erstes Echosignal und ein zweites Echosignal bei unterschiedlichen Füllständen ermittelt, aus dem ersten Echosignal und dem zweiten Echosignal ein Differenzsignal bildet und anhand der Lage der Peaks des Differenzsignals das Erreichen des vorgegebenen Grenzstandes des Füllguts in dem Behälter ermittelt.

Gemäß einer bevorzugten Ausgestaltung beider erfindungsgemäßer Vorrichtungsvarianten wird die Länge des leitfähigen Elements so gewählt, daß sich der Peak des Fiducial Launchers und der End-of-Line Peak zumindest teilweise überlagern. Das leitfähigen Element selbst kann sowohl ein Goubeau-Leiter oder ein Sommerfeld-Leiter sein.

Eine vorteilhafte Weiterbildung der erfindungsgemäßen Vorrichtungsvarianten sieht vor, daß das freie Ende des leitfähigen Elements mit der Innenfläche einer Wand des Behälters oder mit dem Außenfläche der Einkoppeleinheit frontbündig abschließt.

Vorteilhaft und kostengünstig ist es, wenn zur Erkennung des Grenzstandes des Füllguts in dem Behälter eine Diskriminatorschaltung eingesetzt wird, die den Vorzeichenwechsel des Echosignals bei Auftreten des Nutzechosignals oder des Differenzsignals innerhalb eines vorgegebenen Zeitfensters erkennt und ausgibt.

Die Erfindung wird anhand der nachfolgenden Zeichnungen näher erläutert. Es zeigt:
Fig. 1a: eine schematische Darstellung einer ersten Ausgestaltung der erfindungsgemäßen Vorrichtung,
Fig. 1b: eine schematische Darstellung einer zweiten Ausgestaltung der erfindungsgemäßen Vorrichtung,
Fig. 1c: eine schematische Darstellung einer dritten Ausgestaltung der erfindungsgemäßen Vorrichtung,
Fig. 2: ein Diagramm, das die Signalamplitude in Abhängigkeit von der Zeit bei unterschiedlichen Füllgütern darstellt,
Fig. 3: ein Diagramm, das die zeitlichen Änderung der Signalamplitude der Echosignale bei unterschiedlichen Füllgütern darstellt,
Fig. 4: ein Diagramm, das die zeitliche Änderung der Signaldifferenzamplitude der Echosignale bei unterschiedlichen Füllgütern darstellt, und
Fig. 5: ein Blockschaltbild einer bevorzugten Ausgestaltung der erfindungsgemäßen Vorrichtung.

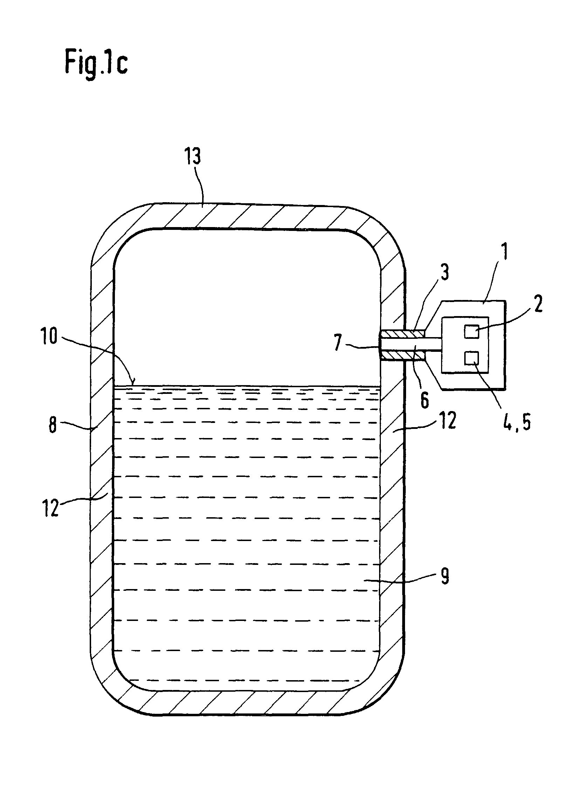

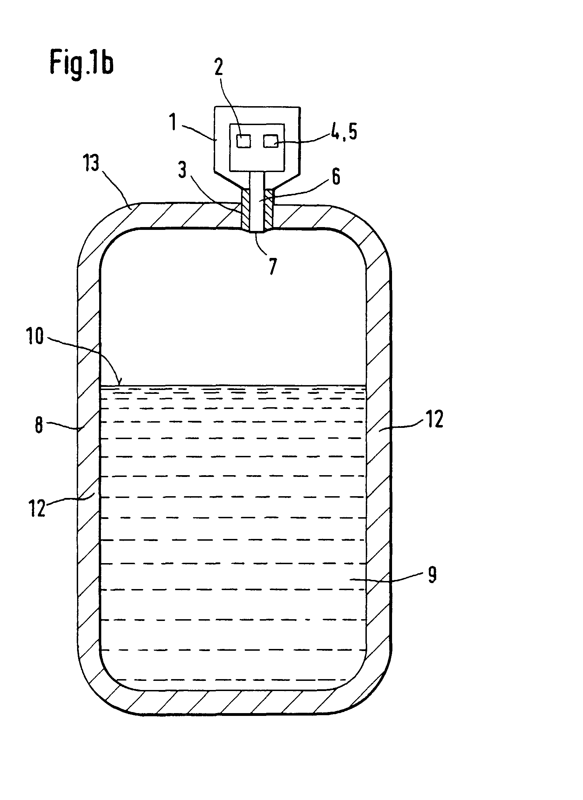

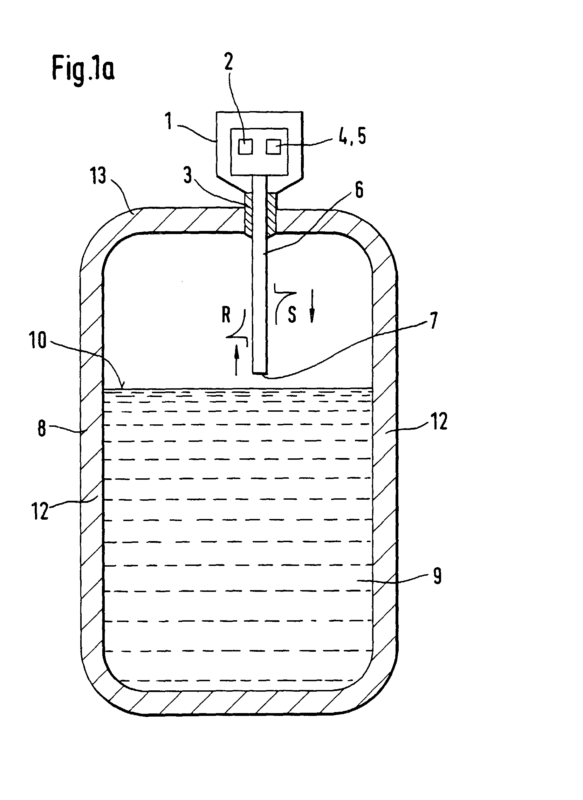

Fig. 1a zeigt eine schematische Darstellung einer ersten Ausgestaltung der erfindungsgemäßen Vorrichtung. Das Füllgut 9, dessen Grenzstand detektiert werden soll, befindet sich in dem Behälter 8. In einer Öffnung im Deckel 13 des Behälters 8 ist die Füllstandsmeßvorrichtung, sprich der TDR-Sensor 1, montiert. TDR ist übrigens die Abkürzung für Time Domain Reflectometry, welche üblicherweise für das Meßverfahren verwendet wird, bei dem zwecks Bestimmung eines Grenzstandes eines Füllguts 9 in einem Behälter 9 hochfrequente Meßsignale an einem leitfähigen Element 6 entlanggeführt werden. Die Meßsignale und die Echosignale, bei denen es sich um Hochfrequenzimpulse handelt, sind in der Fig. 1 stilisiert dargestellt. Die Meßsignale werden in der Signalerzeugungseinheit 2 erzeugt und über die Einkoppeleinheit 3 auf das leitfähige Element 6 eingekoppelt. Aufgrund des Impedanzsprungs beim Übergang von der Einkoppeleinheit 3 (→ Fiducial Launcher) auf das leitfähige Element 6 wird ein Teil des Meßsignals reflektiert.

Im gezeigten Fall ist das freie Ende 7 des TDR-Sensors 1 nicht in Kontakt mit dem Füllgut 9. Da das elektromagnetische Feld, das mit dem Meßsignal gekoppelt ist, einen gewissen Raumbereich um das leitfähige Element herum beansprucht, tritt neben der Reflexion am freien Ende ein weiterer Peak auf, der durch die Reflexion des Meßsignals an der Oberfläche 10 des Füllguts 9 hervorgerufen wird. Dieser Peak ist deutlich meßbar, solange der Abstand 'freies Ende 7 des leitfähigen Elements 6 - Oberfläche des Füllguts' einen vorab exakt festgelegten Maximalabstand nicht überschreitet. Während der Fiducial Launcher und der End-of-Line Peak systemabhängige Echosignale darstellen, handelt es sich bei dem Echosignal, das das Erreichen des Grenzstandes des Füllguts 9 in dem Behälter 8 repräsentiert, um das sog. Nutzechosignal.

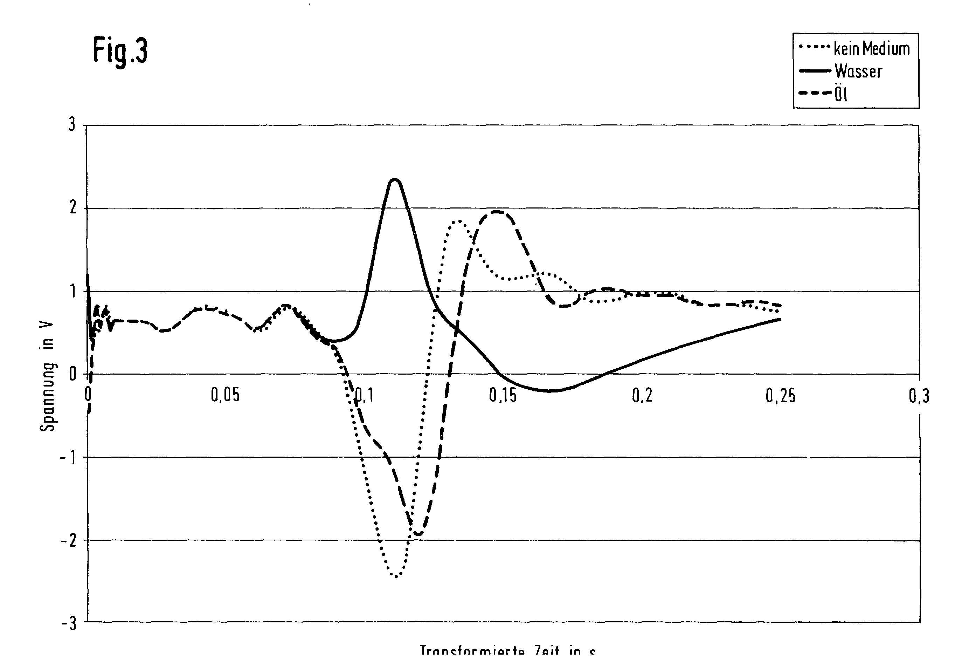

Fig. 1b zeigt eine schematische Darstellung einer zweiten Ausgestaltung der erfindungsgemäßen Vorrichtung. Von der in Fig. 1a gezeigten Ausgestaltung unterscheidet sich diese zweite Variante lediglich dadurch, daß hier das freie Ende 7 des leitfähigen Elements 6 frontbündig mit der Einkoppeleinheit 3 abschließt. Eine Konsequenz dieser Ausgestaltung des TDR-Sensors 1 ist in Fig. 3 deutlich zu erkennen: Der End-of-Line Peak und das Nutzechosignal treten nahezu gleichzeitig auf und interferieren.

Fig. 1c zeigt eine schematische Darstellung einer dritten Ausgestaltung der erfindungsgemäßen Vorrichtung. Von der in Fig. 1b gezeigten Variante unterscheidet sich diese Ausführungsform lediglich dadurch, daß der TDR-Sensor 1 in der Seitenwand 12 des Behälters 8, in dem sich das Füllgut 9 befindet, montiert ist.

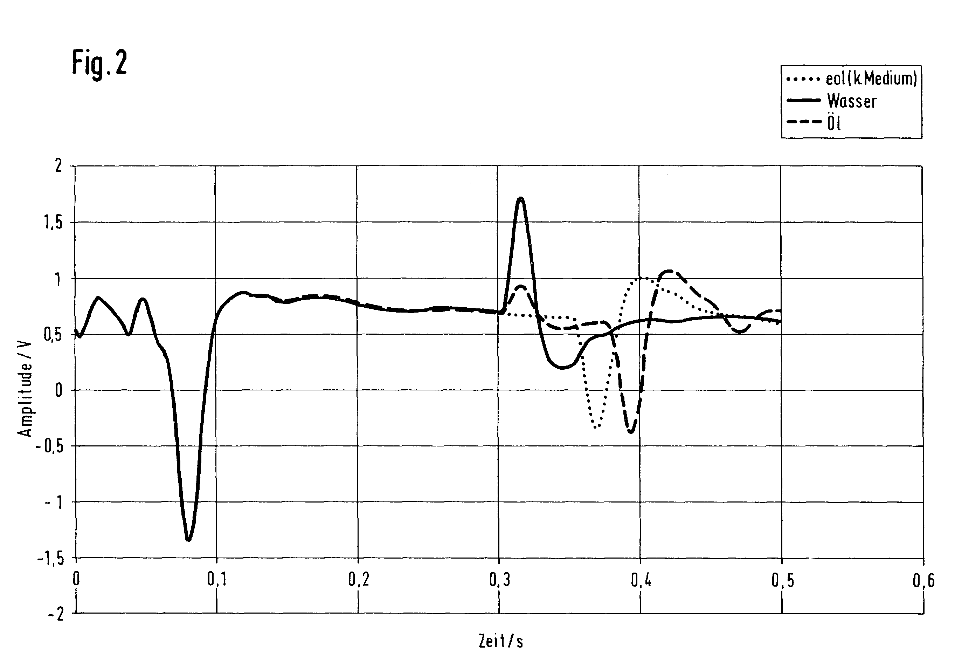

In dem in Fig. 2 gezeigten Diagramm sind die Signalamplituden von Echosignalen ohne Füllgut (gepunktete Linie), beim Füllgut Öl (gestrichelte Linie) und beim Füllgut Wasser (durchgezogene Linie) als Funktion der Zeit dargestellt. Befindet sich kein Füllgut 9 in dem Behälter 8, so zeigt sich nach kurzer Zeit ein relativ starker negativer Peak, der den Signalanteil widerspiegelt, der beim Übergang von der Einkoppeleinheit 3 auf das leitfähige Element 6 auftritt. Wie aus der Fig. 2 ersichtlich ist, ändern sich beim Befüllen des Behälters 9 weder die Lage noch die Amplitude dieses sog. Fiducial Launchers. Dieser Peak stellt somit ein für den jeweils eingesetzten TDR-Sensors 1 systemabhängiges Echosignal dar. Aufgrund seiner Invarianz gegenüber dem Füllgut oder dem jeweiligen Füllstand des Füllguts 9 in dem Behälter 8 wird der Fiducial Launcher als Referenzsignal für das Nutzechosignal oder für ein weiteres systemabhängiges Echosignal verwendet.
Das Nutzechosignal tritt auf, sobald sich ein Füllgut 9 in dem Behälter 8 befindet.

Wie sich anhand des Amplitudenverlaufs des Echosignals, das nicht von der Anwesenheit eines Füllguts 9 beeinflußt wird, erkennen läßt, handelt es sich bei diesem zweiten systemabhängigen Echosignal um den End-of-line Peak. Der End-of-line Peak spiegelt den Signalanteil wider, der am freien Ende 7 des leitfähigen Elements 6 reflektiert wird. Im Gegensatz zum Fiducial Launcher ist der End-of-Line Peak keine Größe, die ausschließlich von dem jeweils verwendeten TDR-Sensor 1 abhängig ist. Vielmehr werden sowohl die Lage als auch die Amplitude des End-of-line Peaks von dem Füllgut 9 beeinflußt, dessen Grenzfüllstand detektiert werden soll. Grund für das Auftreten des End-of-line Peaks zu unterschiedlichen Zeiten bei verschiedenen Füllgütern ist die unterschiedliche Ausbreitungsgeschwindigkeit des Meßsignals in verschiedenen Füllgütern 9.

Eine Variante des erfindungsgemäßen Verfahrens nutzt nun diese Variation im zeitlichen Auftreten des Nutzechosignals und/oder des End-of-line Peaks aus: Erscheint das Nutzechosignal und/oder der End-of-line Peak innerhalb eines oder mehrerer definierter Zeitfenster - Referenzsignal ist jeweils der systemabhängige Fiducial Launcher - so ist dies ein klares Indiz für das Erreichen des Grenzfüllstandes.

Fig. 3 zeigt ein Diagramm, das die zeitlichen Änderung der Signalamplitude der Echosignale bei unterschiedlichen Arten von Füllgütern 9 darstellt. Verwendet wird in diesem Fall ein TDR-Sensor 1 mit einem kurzen leitfähigen Element 6. Aufgrund der geringen Länge des leitfähigen Elements 6 fallen der End-of-line Peak und das Nutzechosignal zeitlich fast zusammen. Befindet sich kein Füllgut 9 in der Nähe des TDR-Sensors 1, so zeigt sich im zeitlichen Amplitudenverlauf des Echosignals lediglich ein ausgeprägter negativer End-of-line Peak. Das Vorzeichen des Peaks ist natürlich stets abhängig von dem Vorzeichen des Meßsignals. Befindet sich in der Nähe des TDR-Sensors 1 ein Füllgut 9 mit hoher Dielektrizitätskonstanten, z. B. Wasser, so erscheint im Zeitbereich des End-of-line Peaks ein positiver Peak als Ergebnis einer Überlagerung von Nutzechosignal und des End-of-line Peak.
Die zweite Variante des erfindungsgemäßen Verfahrens nutzt den zuvor beschriebenen Effekt zur Bestimmung des Grenzfüllstandes aus. Besonders sicher arbeitet diese zweite Variante übrigens, wenn sich ein Füllgut 9 mit einer hohen Dielektrizitätskonstante in dem Behälter 8 befindet. Erscheint in dem Zeitfenster, in dem üblicherweise der negative End-of-line Peak auftritt, ein positiver Peak, so ist dies ein klares Indiz dafür, daß das Füllgut 9 in dem Behälter 8 den Grenzfüllstand erreicht hat.
Wie der Signalverlauf beim Füllgut Öl zeigt, tritt bei einem Füllgut 9 mit relativ kleiner Dielektrizitätskonstante dieser Inversionseffekt nicht auf. Um das erfindungsgemäße Verfahren auch in einem solchen Fall anwenden zu können, wird hier nicht das Echosignal als solches verwendet, sondern die Differenz zwischen dem Echosignal bei Anwesenheit des Füllguts und dem Echosignal ohne Füllgut 9.

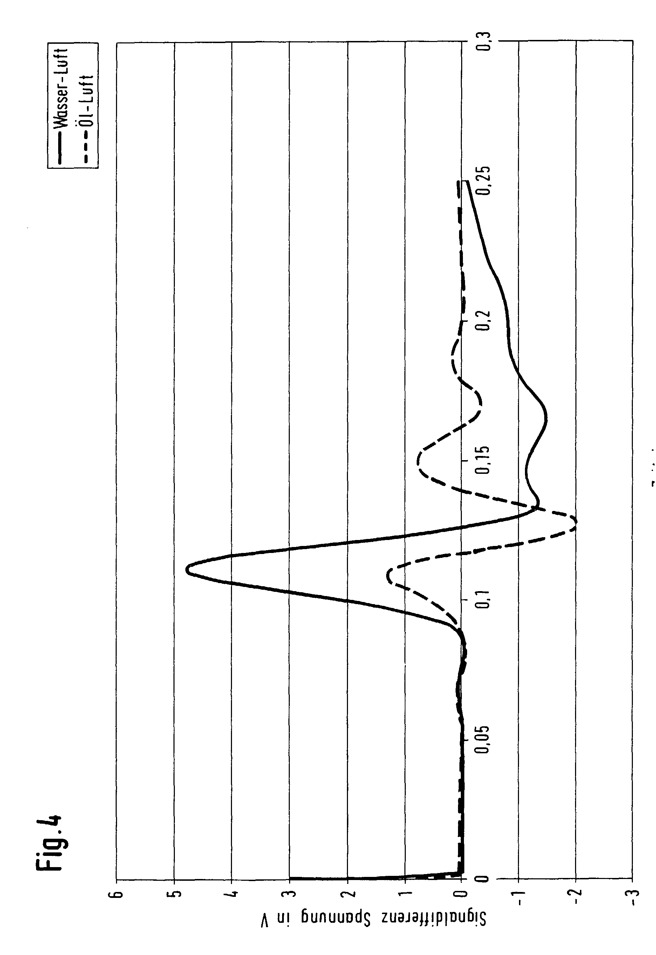

In Fig. 4 ist die resultierende zeitliche Änderung der Signaldifferenzamplitude der beiden Echosignale bei unterschiedlichen Füllgütern 9 darstellt. Die durchgezogene Linie zeigt die Differenz der Echosignale bei Anwesenheit des Füllguts Wassers, während die gestrichelte Linie die Differenz der Echosignale bei Anwesenheit des Füllguts Öl wiedergibt. Sowohl bei der Detektion des Füllstandes von Wasser als auch bei der Detektion des Füllstandes von Öl zeigt sich ein ausgeprägter Peak in einem Zeitfenster, in dem üblicherweise der End-of-line Peak mit entgegengesetztem Vorzeichen erscheint. Tritt also innerhalb eines Zeitfensters um den End-of-line Peak ein positiver Peak auf, so ist dies wiederum ein klares Indiz dafür, daß das Füllgut 9 in dem Behälter 8 den Grenzfüllstand erreicht hat. Um die Sicherheit der Detektionsergebnisse zu erhöhen, ist weiterhin vorgesehen, daß der Grenzfüllstand nur dann zur Anzeige kommt, wenn das Echosignal zusätzlich innerhalb des definierten Zeitfensters einen vorgegebenen Schwellenwert überschreitet.

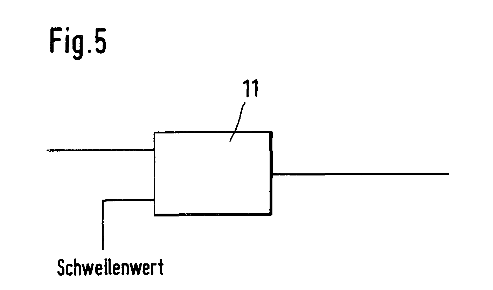

Fig. 5 zeigt ein Blockschaltbild einer bevorzugten Ausgestaltung der erfindungsgemäßen Vorrichtung. Die erfindungsgemäße Vorrichtung läßt sich technisch sehr einfach und kostengünstig realisieren. Es genügt festzustellen, ob innerhalb eines definierten Zeitfensters ein Peak oder eine Inversion des Peaks des Echosignals auftritt oder nicht. Erscheint ein Peak bzw. ein positiver Peak, so ist dies ein eindeutiges Indiz dafür, daß das Füllgut 9 in dem Behälter 8 den Grenzfüllstand erreicht hat. Schaltungstechnisch wird das Echosignal also einfach auf den Eingang eines Komparators 11 oder Schwellenwertdetektors gegeben. Ein am Ausgang des Komparators 11 oder Schwellenwertdetektors erscheinendes Signal besagt, daß der jeweils zu überwachende Grenzfüllstand erreicht ist.

### Bezugszeichenliste

- 1: TDR Sensor
- 2: Signalerzeugungseinheit
- 3: Einkoppeleinheit
- 4: Empfangseinheit
- 5: Auswerteeinheit
- 6: leitfähiges Element
- 7: freies Ende
- 8: Behälter
- 9: Füllgut
- 10: Oberfläche des Füllguts
- 11: Komparator
- 12: Wand des Behälters
- 13: Deckel des Behälters

## Patentansprüche

1. Verfahren zur Bestimmung eines Grenzfüllstandes eines Füllguts (9) in einem Behälter (8),
wobei ein hochfrequentes Meßsignal auf ein leitfähiges Element (6) einer vorgegebenen Länge eingekoppelt und an dem leitfähigen Element (6) entlanggeführt wird,
wobei das Meßsignal jeweils in den Bereichen des leitfähigen Elements (6) als systemabhängiges Echosignal reflektiert wird, in denen sich der Wellenwiderstand sprunghaft ändert,
wobei das Meßsignal als Nutzechosignal reflektiert wird, wenn sich das freie Ende des leitfähigen Elements (6) in unmittelbarer Nähe der Oberfläche (10) des Füllguts (9) oder in Kontakt mit dem Füllgut (9) befindet, und
wobei das Erreichen des vorgegebenen Füllstandes des Füllguts (9) in dem Behälter (8) aufgrund der relativen Lage von Nutzechosignal und zumindest einem systemabhängigen Echosignal oder aufgrund der relativen Lage von zwei systemabhängigen Echosignalen ermittelt wird.

2. Verfahren nach Anspruch 1,
wobei als systemabhängiges Echosignal das Signal herangezogen wird, das beim Übergang des Meßsignals von der Einkoppeleinheit (3) auf das leitfähige Element (6) auftritt (→ Fiducial Launcher), und/oder
wobei als systemabhängiges Echosignal das Signal herangezogen wird, das am freien Ende (7) des leitfähigen Elements (6) reflektiert wird (→ End-of-Line Peak) und/oder
wobei als systemabhängiges Echosignal ein Reflexionssignal herangezogen wird, das durch eine zusätzliche Impedanz innerhalb der Einkoppeleinheit erzeugt wird.

3. Verfahren nach Anspruch 1,
wobei die Laufzeit des Echosignals ab dem Zeitpunkt der Erzeugung des Meßsignals bestimmt wird.

4. Verfahren nach Anspruch 1, 2 oder 3,
wobei das Erreichen des vorgegebenen Füllstandes ausgegeben wird, sobald innerhalb eines vorgegebenen Zeitfensters das Nutzechosignal auftritt, welches ein entgegengesetztes Vorzeichen aufweist wie der Peak des Fiducial Launchers oder der End-of-Line Peak.

5. Verfahren nach Anspruch 1, 2, 3 oder 4,
wobei das Erreichen des vorgegebenen Füllstandes ausgegeben wird, sobald innerhalb eines vorgegebenen Zeitfensters der End-of-Line Peak auftritt.

6. Verfahren zur Bestimmung eines Grenzfüllstandes eines Füllguts (9) in einem Behälter (8),
wobei ein hochfrequentes Meßsignal auf ein leitfähiges Element (6) einer vorgegebenen Länge eingekoppelt und an dem leitfähigen Element (6) entlanggeführt wird,
wobei das Meßsignal jeweils in den Bereichen des leitfähigen Elements (6) als systemabhängiges Echosignal reflektiert wird, in denen sich der Wellenwiderstand sprunghaft ändert,
wobei das Meßsignal als Nutzechosignal reflektiert wird, wenn sich das freie Ende des leitfähigen Elements (6) in unmittelbarer Nähe der Oberfläche (10) des Füllguts (9) oder in Kontakt mit dem Füllgut (9) befindet, und
wobei das Erreichen des vorgegebenen Füllstandes des Füllguts (9) in dem Behälter (8) aufgrund der Änderung in der Amplitude eines systemabhängigen Echosignals, insbesondere auf aufgrund der Änderung in der Amplitude des End-of-line Peaks bestimmt wird.

7. Verfahren zur Bestimmung eines Grenzfüllstandes eines Füllguts (9) in einem Behälter (8),
wobei ein hochfrequentes Meßsignal auf ein leitfähiges Element (6) einer vorgegebenen Länge eingekoppelt und an dem leitfähigen Element (6) entlanggeführt wird,
wobei das Meßsignal als Echosignal jeweils in den Bereichen des leitfähigen Elements (6) reflektiert wird, in denen sich der Wellenwiderstand sprunghaft ändert,
wobei ein erstes Echosignal und ein zweites Echosignal bei unterschiedlichen Füllständen ermittelt werden,
wobei ein Differenzsignal aus dem ersten Echosignal und dem zweiten Echosignal gebildet wird und
wobei das Erreichen eines vorgegebenen Grenzstandes des Füllguts (9) in dem Behälter (8) anhand der Lage des Peaks bzw. der Peaks des Differenzsignals oder anhand der Änderung in der Amplitude des Peaks oder der Peaks des Differenzsignals ermittelt wird.

8. Verfahren nach Anspruch 7,
wobei das erste Echosignal ermittelt wird, wenn sich das freie Ende (7) des leitfähigen Elements (6) in unmittelbarer Nähe zur Oberfläche (10) des Füllguts (9) oder in Kontakt mit dem Füllgut (9) befindet, und
wobei das zweite Echosignal ermittelt wird, wenn sich das freie Ende (12) des leitfähigen Elements (6) nicht in unmittelbarer Nähe zur Oberfläche (10) des Füllguts (9) oder in Kontakt mit dem Füllgut (9) befindet.

9. Verfahren nach Anspruch 7 oder 8,
wobei das Erreichen des vorgegebenen Füllstands ausgegeben wird, sobald in einem Fenster, in dem der Fiducial Launcher Peak und/oder des End-of-Line Peak auftreten/auftritt, wenn kein Füllgut (9) in unmittelbarer Nähe oder in Kontakt mit dem leitfähigen Element (6) ist, das Differenzsignals auftritt.

10. Verfahren nach Anspruch 1, 6 oder 7,
wobei das Erreichen des vorgegebenen Füllstandes ausgegeben wird, wenn die Amplitude des Nutzechosignals oder ein Peak des Differenzsignals größer oder gleich einem vorgegebenen Schwellenwert ist.

11. Vorrichtung zur Bestimmung eines Grenzfüllstandes eines Füllguts (9) in einem Behälter (8), bestehend aus einer Signalerzeugungseinheit (2), einer Einkoppeleinheit (3), einem leitfähigen Element (6), einer Empfangseinheit (4) und einer Auswerteeinheit (5),
wobei die Signalerzeugungseinheit (2) hochfrequente Meßsignale erzeugt,
wobei die Einkoppeleinheit (3) ein Meßsignal auf ein leitfähiges Element (6) einer vorgegebenen Länge einkoppelt,
wobei das leitfähige Element (6) das Meßsignal führt,
wobei das Meßsignal jeweils in den Bereichen des leitfähigen Elements (6) als systemabhängiges Echosignal Reflexionen erfährt, in denen sich der Wellenwiderstand sprunghaft ändert,
wobei das Meßsignal als Nutzechosignal Reflexionen erfährt, wenn das leitfähige Element (6) in unmittelbarer Nähe zur Oberfläche (10) des Füllguts (9) oder in Kontakt mit dem Füllgut (9) ist, und
wobei die Auswerteeinheit (5) das Erreichen eines vorgegebenen Füllstandes des Füllguts (9) in dem Behälter (8) ausgibt, wenn das Nutzechosignal bzw. ein erstes systemabhängiges Echosignal innerhalb eines vorgegebenen Zeitfensters bezüglich des systemabhängigen Echosignals bzw. eines zweiten systemabhängigen Echosignals auftritt.

12. Vorrichtung zur Bestimmung eines Grenzfüllstandes eines Füllguts (9) in einem Behälter (8), bestehend aus einer Signalerzeugungseinheit (2), einer Einkoppeleinheit (3), einem leitfähigen Element (6), einer Empfangseinheit (4) und einer Auswerteeinheit (5),
wobei die Signalerzeugungseinheit (2) hochfrequente Meßsignale erzeugt,
wobei die Einkoppeleinheit (3) ein Meßsignal auf ein leitfähiges Element (6) einer vorgegebenen Länge einkoppelt,
wobei das leitfähige Element (6) das Meßsignal führt,
wobei das Meßsignal jeweils in den Bereichen des leitfähigen Elements (6) als Echosignal reflektiert wird, in denen sich der Wellenwiderstand sprunghaft ändert, und
wobei die Empfangseinheit/Auswerteeinheit (4, 5) ein erstes Echosignal und ein zweites Echosignal bei unterschiedlichen Füllständen ermittelt, aus dem ersten Echosignal und dem zweiten Echosignal ein Differenzsignal bildet und anhand der Lage der Peaks des Differenzsignals das Erreichen des vorgegebenen Grenzstandes des Füllguts (9) in dem Behälter (8) ermittelt.

13. Vorrichtung nach Anspruch 11 oder 12,
wobei die Länge des leitfähigen Elements (6) so gewählt ist, daß sich der Peak des Fiducial Launchers und der End-of-Line Peak zumindest teilweise überlagern.

14. Vorrichtung nach Anspruch 11 oder 12,
wobei es sich bei dem leitfähigen Element (6) um einem Goubau-Leiter oder um einen Sommerfeld-Leiter oder um einen Koaxial-Leiter, bestehend auf einem Leiter und einer räumlich von dem Leiter getrennten Abschirmung, oder um zumindest zwei Leiter handelt, die voneinander beabstandet sind.

15. Vorrichtung nach Anspruch 11 oder 12,
wobei das freie Ende (7) des leitfähigen Elements (6) mit der Innenfläche einer Wand (12) des Behälters (8) oder mit der Außenfläche der Einkoppeleinheit (3) frontbündig abschließt.

16. Vorrichtung nach einem oder mehreren der vorhergehenden Ansprüche, wobei eine Diskriminatorschaltung (11) vorgesehen ist, die den Vorzeichenwechsel des Echosignals bei Auftreten des Nutzechosignals oder des Differenzsignals innerhalb eines vorgegebenen Zeitfensters ausgibt.
